# EUROPÄISCHE PATENTSCHRIFT

(11) **EP 3 671 632 B1**
(45) Veröffentlichungstag und Bekanntmachung des Hinweises auf die Patenterteilung: **16.10.2024**
(21) Anmeldenummer: 19215579.4
(22) Anmeldetag: 12.12.2019
(51) Int. Cl.: G06T 7/00, G07C 3/00

(54) **BILDBASIERTE WARTUNGSVORHERSAGE UND DETEKTION VON FEHLBEDIENUNGEN**
IMAGE-BASED MAINTENANCE PREDICTION AND ERRONEOUS OPERATION DETECTION
PRÉVISION D'ENTRETIEN À BASE D'IMAGE ET DÉTECTION DE FAUSSES MAN UVRES

(30) Priorität: 20.12.2018 DE 102018133196
(43) Veröffentlichungstag der Anmeldung: 24.06.2020
(73) Patentinhaber: Carl Zeiss Microscopy GmbH, 07745 Jena (DE)
(72) Erfinder: AMTHOR, Manuel, 07745 Jena (DE); HAASE, Daniel, 07751 Zöllnitz (DE); WOLLESCHENSKY, Ralf, 07743 Jena (DE)
(74) Vertreter: LifeTech IP Spies & Behrndt Patentanwälte PartG mbB

(56) Entgegenhaltungen:
- DE-A1- 3 811 791
- MOHAMMAD RASHIDI ET AL: "Autonomous Scanning Probe Microscopy in-situ Tip Conditioning through Machine Learning", ARXIV.ORG, CORNELL UNIVERSITY LIBRARY, 201 OLIN LIBRARY CORNELL UNIVERSITY ITHACA, NY 14853, 19 March 2018 (2018-03-19), XP080865936

## Beschreibung

### Gebiet der Erfindung

Die Erfindung bezieht sich im Allgemeinen auf ein System für eine Vorhersage einer Notwendigkeit von Wartungsmaßnahmen und insbesondere auf ein Computer-implementiertes Verfahren für vorausschauende Wartung für ein Mikroskopsystem, ein entsprechendes Wartungsüberwachungssystem sowie ein Computerprogrammprodukt.

### Technischer Hintergrund

Moderne technische Geräte erfordern oft aufwändige und zeitintensive Wartungsmaßnahmen nach einem vorgegebenen Wartungsplan. Dieser nutzt Erfahrungen aus der Vergangenheit, um die Wartungsintervalle so festzulegen, dass die technischen Geräte nicht wegen fehlender Wartungsarbeiten ausfallen. Aus diesem Umstand ergibt sich die Tatsache, dass Wartungsmaßnahmen tatsächlich häufiger durchgeführt werden als es für manche der technischen Geräte erforderlich wäre. Dies gilt insbesondere dann, wenn die Geräte von qualitativ hochwertigem Personal systemgerecht und mit Sorgfalt behandelt werden. Dies gilt nicht nur für Piloten, die teilweise sogar eine erhöhte Vergütung dafür bekommen, dass sie Triebwerke schonend behandeln (sehr selten unter Volllast) aber genauso für Hochpräzisionsinstrumente wie hochkomplexe Präzisionsmikroskopsysteme. Diese werden entweder beispielsweise im medizinischen, biomedizinischen oder materialwissenschaftlichen Bereichen eingesetzt; und auch hier gilt, dass die Systemausfallzeiten durch Wartungsarbeiten so gering wie möglich gehalten werden sollten, um eine möglichst schnelle Amortisation der Investitionen in diese Geräte zu ermöglichen.

Fehlbedienungen können zu verkürzten Wartungszyklen oder auch unerwarteten Wartungsfällen führen. Moderne Wartungsansätze berücksichtigen daher die tatsächliche Nutzung eines Systems, wobei in seltenen Fällen bereits digitale Zwillinge der Systeme - insbesondere bei den Herstellern der Systeme - bereitgehalten werden, um Wartungszyklen dynamisch zu bestimmen. Dazu wäre allerdings eine ständige elektronische Verbindung (Internet) des Mikroskopsystems mit dem Hersteller erforderlich. Aus Datenschutz- und anderen Gründen ist vielfach eine derartige Kopplung nicht erwünscht. Außerdem wäre es für diese Art der ständigen Überwachung (monitoring) erforderlich, dass die Mikroskopsysteme mit einer Vielzahl zusätzlicher Sensoren ausgestattet wären, die eine genaue Erfassung der Handhabung und Verwendung der Mikroskopsysteme ermöglichen. Eine derartige Ausstattung mit zusätzlichen Sensoren wäre allerdings mit erheblichen zusätzlichen Kosten verbunden, um Hersteller-empfohlene dynamische Wartungszyklen im Sinne von vorausschauender Wartung (predictive maintenance) zu ermöglichen. Das Konzept der vorausschauender Wartung sieht vor, dass nur dann Wartungsarbeiten durchgeführt werden, wenn diese voraussichtlich tatsächlich erforderlich sind. Um diese dynamische, vorausschauende Wartung zu ermöglichen, ist es normalerweise notwendig, Daten über die Nutzung der Systeme zu erhalten, wie dies durch zusätzliche Sensoren innerhalb der Mikroskopsysteme gegeben wäre. Wie bereits dargestellt, führt dies zu zusätzlichen, nicht unerheblichem technischen Aufwand und signifikanten zusätzlichen Kosten.

In einen ähnlichen Zusammenhang gibt es bereits eine Veröffentlichung: Das Dokument von MOHAMMAD QASHIDH ET AL: "Autonomous Scanning Probe Microscopy in-situ Tip Conditioning through Machine Learning", ARXMORG, 19» März 2018 (2018-03-19}, XPO80865936 beschreibt ein Scanning-Probe-Mikroskop, bei dem es auf eine atomscharfe Spitze zum Abtasten ankommt. Zum Bestimmen der Kondition der Tastspitze wird dabei ein maschinelles Lernverfahren eingesetzt.

Die zu Grunde liegende Aufgabe des hier vorgestellten Konzeptes kann also angesehen werden als eine Ermöglichung von vorausschauender Wartung, ohne dass aufwändige zusätzliche interne Sensoren im Mikroskopsystem und/oder zusätzliche Netzwerkverbindungen für das Konzept eines digitalen Zwillings erforderlich wären.

### Übersicht über die Erfindung

Diese Aufgabe wird durch das hier vorgeschlagene Computer-implementierte Verfahren für ein Erkennen einer Notwendigkeit einer vorausschauenden Wartung für ein optisches Mikroskopsystem, ein entsprechendes Wartungsüberwachungssystem für vorausschauende Wartung für ein optisches Mikroskopsystem und ein Computerprogrammprodukt entsprechend den unabhängigen Ansprüchen gelöst. Weitere Ausgestaltungen werden durch die jeweils abhängigen Ansprüche beschrieben.

Entsprechend eines Aspektes der vorliegenden Erfindung wird ein Computer-implementiertes Verfahren zum Ermitteln einer Notwendigkeit für vorausschauende Wartung für ein optisches Mikroskopsystem vorgestellt. Das Verfahren weist ein Bereitstellen eines optischen Mikroskopsystems, das einen Bildsensor zur Aufnahme von digitalen Bildern einer Probe aufweist, sowie ein Aufnehmen von digitalen Bildern mittels des Bildsensors während eines regulären Betriebes des optischen Mikroskopsystems auf.

Ein aufgenommenes digitales Bild wird als mindestens ein Eingangsdatensatz einem Bildanalysesystem zur Verfügung gestellt. Darauf basierend wird mindestens ein Merkmal durch das Bildanalysesystem in dem mindestens einen aufgenommenen digitalen Bild bestimmt, wobei das Merkmal zu einer Fehlfunktion des optischen Mikroskopsystems im regulären Betrieb in Korrelation steht.

Das Verfahren weist weiterhin ein Erzeugen eines Statussignals für einen Zustand des optischen Mikroskopsystems durch das Bildanalysesystem auf Basis des mindestens einen digitalen Bildes und des mindestens einen darin enthaltenen Merkmals sowie und ein Bestimmen - durch Nutzung des Statussignals - einer Komponentengruppe des optischen Mikroskopsystems, für die eine Wartungsmaßnahme erforderlich ist, auf.

Entsprechend eines anderen Aspektes der vorliegenden Erfindung wird ein Wartungsüberwachungssystem zum Ermitteln einer Notwendigkeit für vorausschauende Wartung für ein optisches Mikroskopsystem vorgestellt. Das Wartungsüberwachungssystem weist ein optisches Mikroskopsystem auf, das einen Bildsensor zur Aufnahme von digitalen Bildern einer Probe aufweist, und einen Bildsensor zum Aufnehmen von digitalen Bildern während eines regulären Betriebes des optischen Mikroskopsystems.

Weiterhin weist das Wartungsüberwachungssystem ein Bildanalysesystem auf, das angepasst ist zum Empfangen mindestens eines aufgenommenen digitalen Bildes als mindestens einen Eingangsdatensatz für ein Bildanalysesystem. Dabei ist das Bildanalysesystem angepasst zum Bestimmen mindestens eines Merkmals durch das Bildanalysesystem in dem mindestens einen aufgenommenen digitalen Bild, wobei das Merkmal zu einer Fehlfunktion des optischen Mikroskopsystems im regulären Betrieb in Korrelation steht. Außerdem weist das Wartungsüberwachungssystem ein Erzeugen eines Statussignals für einen Zustand des optischen Mikroskopsystems durch das Bildanalysesystem auf Basis des mindestens einen digitalen Bildes und des mindestens einen darin enthaltenen Merkmals, und ein Bestimmen, durch Nutzung des Statussignals einer Komponentengruppe des optischen Mikroskopsystems, für die eine Wartungsmaßnahme erforderlich ist, auf.

Weiterhin können Ausführungsformen in Form eines entsprechenden Computerprogrammpproduktes implementiert sein, auf welches durch ein Computer-nutzbares oder Computer-lesbares Medium zugegriffen werden kann, welches Programmcode zur Nutzung durch oder in Verbindung mit einem Computer oder Instruktionsausführungssystem aufweist. Für den Kontext dieser Beschreibung kann ein Computer-nutzbares oder Computer-lesbares Medium jede Vorrichtung sein, die Mittel zum Speichern, Kommunizieren, Weiterleiten oder Transportieren des Programms für eine Nutzung durch oder in Verbindung mit einem Instruktionsausführungssystem, einer entsprechenden Vorrichtung oder Apparatur aufweist.

Das Computer-implementierte Verfahren zum Ermitteln einer vorausschauenden Wartung für ein optisches Mikroskopsystem weist mehrere Vorteile und technische Effekte auf:

Das vorgeschlagene Konzept erlaubt die Durchführung des Prinzips der vorausschauenden Wartung ohne den konsequenten Weg des Internet of Things (Industrie 4.0) einzuschlagen, d.h., ohne die Mikroskopsysteme mit zusätzlichen, aufwändigen, internen Sensoren auszustatten. Das vorgeschlagene Konzept erfordert keine zusätzliche kostenintensive Erfassung und Sammlung von Temperaturdaten, Spannungswerten und/oder Nutzungsdaten direkt an den zu überwachenden Bauteilen des Mikroskopsystems.

Vielmehr fußt das vorgeschlagene Konzept auf einer Auswertung und Nutzung von ohnehin während des normalen Betriebes und der normalen Nutzung des Mikroskopsystems anfallenden Daten. Außerdem ist es nicht erforderlich, zusätzliche (Referenz-) Bilder aufzuzeichnen. Die Analyse für die Feststellung der Notwendigkeit einer vorausschauenden Wartungsmaßnahme erfolgt vielmehr auf der Basis der Bilder, die ein Nutzer während des normalen Geräteeinsatzes, beispielsweise in Experimenten, aufnimmt. Zusätzliche Wartungs- oder Kalibrierungsaufnahmen sind nicht erforderlich.

Darüber hinaus erlaubt eine Aufzeichnung und Auswertungen der im normalen Betrieb aufgezeichneten Bilder in Zeitreihen eine längerfristige Analyse des Nutzungsverhaltens, wodurch wiederum auf bereits vorliegende oder eventuell zukünftig auftretende Fehler des Mikroskopsystems geschlossen werden kann.

Dabei kann auch ein Vergleich zwischen mehreren Mikroskopsystemen (ggfs. der gleichen Baureihe/des gleichen Typs) für eine noch präzisere Vorhersage einer Wartungsnotwendigkeit beitragen.

Das vorgeschlagene Konzept erlaubt also eine Zustandsbestimmung und -erkennung bestehender Fehler am System - z.B. defekte Komponente, Dejustage, etc. - eine Abschätzung bezüglich zukünftig auftretender Fehler - inklusive eines Zeithorizontes - und eine Ursachenanalyse - z.B. eine Unterscheidung zwischen gerätebedingten, probenbedingten und nutzungsbedingten Fehlern.

Die meisten Nachteile bisher bekannter Verfahren zur Verbesserung der Wartung von Mikroskopsystemen können durch das hier vorgeschlagene Konzept überwunden werden: (a) Häufig können zusätzlich erforderliche Sensoren aus technischen oder Kostengründen nicht nachgerüstet werden, (b) eine Ableitung des Gerätezustandes aus individuellen Messparameterwerten einzelner Sensoren an einzelnen Komponenten des Mikroskopsystems lassen häufig keine Gesamtbeurteilung des Zustandes des Mikroskopsystems zu oder erfordern ein sehr komplexes Regelwerk und eine große Anzahl von Sensoren und entsprechende Messwerte. Trotzdem sind diese häufig nicht repräsentativ, um den Gesamtzustand eines Mikroskopsystems zu beurteilen.

Mit dem neu vorgeschlagenen Konzept kann es dagegen gelingen, durch eine Anpassung von Aufnahmeparametern des Mikroskopsystems Fehler des Nutzers zu kompensieren, um die volle Leistungsfähigkeit des Mikroskopsystems auszuschöpfen. Außerdem kann auch eine Nutzung von unterschiedlichen Bedienern des Mikroskopsystems, für die die zusätzlichen internen Sensoren unterschiedliche Messwerte liefern würden, bei der Beurteilung des Gerätezustands kompensiert werden.

Der Einsatz von Techniken der künstlichen Intelligenz, der Bilderkennung und des maschinellen Lernens ermöglichen nun eine Bewertung des Ergebnisses des Mikroskopsystems, nämlich eines oder mehrerer aufgenommener Bilder (images) im regulären Betrieb des Mikroskopsystems, um aus deren Beurteilung und der "Erfahrung" aus vorher aufgenommenen Bildern mit bekannten Systemfehlern mittels eines trainierten neuronalen Netzwerkes, als ein Beispiel für ein Bildanalysesystem, Rückschlüsse auf das gesamte Mikroskopsystem oder dessen einzelne Komponenten zu schließen.

Dazu sind keine Referenzproben, Referenzmuster oder Referenzeinstellungen erforderlich. Der normale Betrieb des Mikroskopsystems reicht aus, um eine kontinuierliche Beurteilung/Bewertung des Gesamtzustandes des Mikroskopsystems zu ermöglichen, um so vorbeugende Wartungsmaßnahmen zu ermitteln, vorzuschlagen und zu planen, um die Ausfallzeiten des Mikroskopsystems so gering wie möglich zu halten, so dass die Anwenderund/oder Kundenzufriedenheit ein Höchstmaß erreicht.

Im Wesentlichen besteht der Vorteil darin, dass notwendige oder empfohlene Wartungsmaßnahmen nicht durch zusätzliche Vorrichtungen und/oder Erweiterungen - insbesondere mechanische, elektromechanische und oder elektronische Sensoren - ergänzt und erweitert werden müssen, sondern dass bereits vorhandene Komponenten des Mikroskopsystems zum Ermitteln einer Notwendigkeit für vorausschauende Wartungsmaßnahmen genutzt werden. Damit wird die Komplexität des Mikroskopsystems nicht erhöht, so dass auch für diese nicht notwendigen Erweiterungen keine zusätzlichen Wartungsmaßnahmen erforderlich sind. Vielmehr werden die bereits vorhandenen Teilsysteme genutzt und - gemäß dem Verfahren - im ordnungsgemäßen, routinemäßigen, regulären Betrieb des Mikroskopsystems besser genutzt, insbesondere durch verbesserte Auswertungen der aufgenommenen digitalen Bilder, die im regulären Betrieb ohnehin aufgenommen werden. Ein entsprechend angepasstes Bildanalysesystem bildet die Basis für diese Lösung.

Zusammenfassend lässt sich sagen, dass die aufgenommenen Bilder durch die Zweitnutzung - d.h. durch die Auswertung der ohnehin während des regulären Betriebes des Mikroskopsystems anfallenden Bilder hinsichtlich erforderlicher Wartungsmaßnahmen - eine deutliche Verbesserung der Nutzugszeiten von Mikroskopsystemen ermöglicht wird.

Im Folgenden werden weitere Ausführungsbeispiele des erfinderischen Konzeptes für das Verfahren, welche gleichermaßen für das entsprechende Wartungsüberwachungssystem nutzbar sind, vorgestellt:

Gemäß einem vorteilhaften Ausführungsbeispiel des Verfahrens kann das Bildanalysesystem ein Lernsystem mit Eigenschaften des maschinellen Lernens aufweisen. Dabei kann das Verfahren zusätzlich ein Trainieren des Lern-Systems mit einem Satz von digitalen Bildern mittels maschinellen Lernens zur Generierung eines Lernmodells zur Erkennung des mindestens einen Merkmals - beispielsweise Anomalien oder andere Auffälligkeiten - in einem der aufgenommenen digitalen Bilder von Proben im regulären Betrieb des Mikroskopsystems aufweisen. Bei dem Lernsystem kann es sich beispielsweise um ein System zum überwachten Lernen handeln, beispielsweise ein Deep Neural Network (DNN) oder ein anderes geeignetes System für künstliche Intelligenz bzw. maschinelles Lernen. Die Bilder des Satzes von digitalen Bildern zum überwachten Lernen zur Generierung des Lernmodells mit Metadaten können dazu annotiert sein, d.h. dass die jeweiligen Bilder des Satzes von digitalen Bildern zum überwachten Lernen durch Metadaten ergänzt sind, welche beispielsweise Anomalien oder andere Auffälligkeiten und Merkmale in den Trainingsbildern beschreiben. Dazu können auch vorgeschlagene Wartungsmaßnahmen anhand der Auffälligkeiten, Anomalien und Merkmale in den Bildern in den Metadaten ergänzt sein.

Gemäß einem ergänzenden Ausführungsbeispiel des Verfahrens können dementsprechend die Metadaten mindestens eines ausgewählt aus der Gruppe bestehend aus Folgendem aufweisen: einen Zeitintervallwert, in dem die Wartungsmaßnahme erforderlich ist, ein erwarteter Ausfallzeitpunkt einer Komponente des Mikroskopsystems, eine numerische Zustandsangabe - beispielsweise Bewertungsstufen 1 bis 10 - einer einzelnen Komponente (oder einer Gruppe) des Mikroskopsystems, und eine Benennung einer defekten Komponente des Mikroskopsystems. Auf diese Weise wird das Lernsystem durch das Verfahren dahingehend trainiert, aus bestimmten Merkmalen der aufgenommenen Bilder im regulären Betrieb des Mikroskopsystems anfallende Wartungsmaßnahmen an einzelnen Komponenten oder Komponentengruppen des Mikroskopsystems zu bestimmen.

Gemäß einem weiteren ergänzenden Ausführungsbeispiel des Verfahrens kann das Bestimmen der Komponentengruppe des Mikroskopsystems zusätzlich ein Bestimmen eines Zeitintervallwertes, in dem die Wartungsmaßnahme erforderlich ist, aufweisen. Damit können zukünftige Wartungsmaßnahmen in einem Wartungsplan dynamisch hinterlegt werden. Gleichartige Wartungsmaßnahmen oder Wartungsmaßnahmen an Mikroskopsystemen an unterschiedlichen Standorten können auf diese Weise durch das Wartungspersonal besser koordiniert werden.

Gemäß einem erweiterten Ausführungsbeispiel des Verfahrens kann beim Erzeugen des Statussignals durch das Bildanalysesystem mindestens ein weiterer erfasster Sensorwert - insbesondere nicht vom Bildsensor - des Mikroskopsystems erfasst werden, welcher/welche als zusätzlicher/e Eingangsdaten für das Lernsystem genutzt wird/werden. Dabei ist es sinnvoll, derartige Sensormesswerte auch beim Trainieren des Lernsystems zu berücksichtigen. Dazu kann es hilfreich sein, auch die zusätzlich dem Lernsystem zur Verfügung gestellten Eingangsdatensätze der zusätzlichen Sensorwerte entsprechend zu annotieren, so dass aus einer Kombination der Sensorwerte zusammen mit den analysierten aufgenommenen Bildern im regulären Betrieb Wartungsmaßnahmen abgeleitet werden können. Als Beispiel für derartige zusätzliche Sensormesswerte können Intensitätswerte der Beleuchtung - entweder passiv, d.h., mittels eines Sensors, oder aktiv, d.h., beispielsweise mittels des Stromflusses durch das Leuchtmittel gemessen - bewertet werden.

Gemäß einem weiteren vorteilhaften Ausführungsbeispiel des Verfahrens weist das mindestens eine enthaltene Merkmal in dem mindestens einem aufgenommenen digitalen Bild im regulären Betrieb mindestens eines auf, das in der Gruppe enthalten ist, die aus Folgendem besteht: Streifen, Jitter, ungleichmäßige Helligkeit - beispielsweise wegen ungleichmäßiger Feldausleuchtung - reduzierter Auflösung, überhöhtes Bildrauschen - beispielsweise abgeleitet aus einem oder mehreren vorgegebenen oder dynamisch ermittelten Grenzwerten - geringes Signal-zu-Hintergrund-Verhältnis, geringe Laserleistung, reduzierte Empfindlichkeit und Fehlstellen im digitalen Bild. Grundsätzlich kann es sich dabei um alle erfassbaren und ausführbaren Parameter eines digitalen Bildes handeln.

Gemäß einer möglichen Ausführungsform des Verfahrens kann das Lernmodel für ein einzelnes Mikroskopsystem oder für eine Mehrzahl von Mikroskopsystemen generiert werden. Damit kann das Lernmodell beispielsweise für alle Mikroskopsysteme einer Baureihe, die zu einer Mikroskopserie gehören, genutzt werden, ohne es jeweils wieder neu trainieren zu müssen.

Entsprechend einer ergänzenden Ausführungsform des Verfahrens kann während des regulären Betriebes des Mikroskopsystems mindestens ein Bedienparameterwert - idealerweise als eine Zeitreihe - eines Bedienungselementes - wodurch ein Nutzerverhalten erfasst wird - des Mikroskopsystems gemessen werden, der zusätzlich bei der Bestimmung des Statussignals genutzt wird bzw. diesen beeinflusst. Dabei kann beispielsweise erkannt werden, dass an einzelnen Stellgliedern des Mikroskopsystems immer wieder manuelle Nachjustagen im regulären Betrieb vorgenommen werden, die in ihrer Anzahl und in ihren zeitlichen Abständen von einem Normalbetrieb des Mikroskopsystems abweichen und insofern als Anomalien bzw. auffällige Merkmale, die von Sensormesswerten in einem ordnungsgemäßen normalen Betrieb erzeugt werden, erkannt werden.

Ein derartiges zusätzliches Erfassen von typischem Bedienverhalten eines Nutzers hinsichtlich des Mikroskopsystems könnte dabei in den Bereich des unüberwachten Lernens und Trainieren des Lernsystems fallen. Dazu ist das Lernsystem angepasst, um Auffälligkeiten und Anomalien in den erfassten genannten Zeitreihen von gemessenen Parameterwerten einzelner Bedienelemente zu erkennen.

Gemäß eines weiter entwickelten Ausführungsbeispiels des Verfahrens kann bei dem Lernmodell zur Erkennung des mindestens einen Merkmals mindestens eine Kategorie betroffen sein, die ausgewählt ist aus der Gruppe bestehend aus: Klassifikation von Servicestufen des Mikroskopsystems, Regression auf erwarteten Ausfallzeitpunkt des Mikroskopsystems, Korrelation des mindestens einen Merkmals oder eine Kombination mehrerer Merkmale des digitalen Bildes mit Bestimmung eines Wartungserfordernisses einer zuordenbaren Komponente oder Komponentengruppe des Mikroskopsystems. Auf diese Weise sind detaillierte Wartungspläne leicht erstellbar und für das Wartungspersonal gut planbar.

Gemäß einem erweiterten Ausführungsbeispiel des Verfahrens kann das Statussignal aus einer Kombination von Steuersignalen generiert werden. Dabei kann sich jeweils eines der Steuersignale mindestens auf eines der folgenden beziehen: eine Fehlerquelle im Mikroskopsystem, ein Vertrauensfaktor des Signals der Fehlerquelle, eine Art eines Fehlers - insbesondere Defekt oder Verschleiß - ein Zahlenäquivalent (z.B. Prozentangabe) einer Qualitätseinbuße, eine erforderliche Wartungsmaßnahme, ein Zeitintervall für eine empfohlene oder erforderliche Wartungsmaßnahme, eine Angabe der Komponente, für die die Wartungsmaßnahme erforderlich ist oder wird, Information - insbesondere eine Empfehlung - über alternative Mikroskopsystemeinstellungen, um eine Fehlfunktion einer Komponente mindestens teilweise auszugleichen, Informationen über eine Fehlerquelle einer Positionierung oder Fehlpräparation der Probe und Ähnliches. Grundsätzlich sind auf diese Weise alle Komponenten und Einstellmöglichkeiten - insbesondere aber die Komponenten, die einer regelmäßigen Wartung unterliegen - erfassbar.

Gemäß eines zusätzlichen erweiterten Ausführungsbeispiels des Verfahrens kann das Statussignal durch das Lernsystem dadurch bestimmt werden, dass ein Vergleich mit im regelmäßigen Betrieb erfassten Zeitfolgen einer Kombination von Sensorparametern von Bedienungselementen des Mikroskopsystems mit Erwartungswerten der Kombination von Sensorparametern von Bedienungselementen des Mikroskopsystems eine signifikante Abweichung - beispielsweise größer als ein dynamisch ermittelter Schwellwert - ergibt. Auch derartige Zeitfolgen können mittels des Lernsystems - insbesondere durch unüberwachtes Lernen (unsupervised learning) während des regulären Betriebes des Mikroskopsystems - für eine Beurteilung der Sensorparameter, eine Ermittlung von Abweichungen und einer Bestimmung bzw. Empfehlung von Wartungsmaßnahmen oder Wartungszeitpunkten eingesetzt werden. Die festzustellende(n) Abweichung(en) von Werten im Normalbereich (Positivbeispiele) können durch Systeme und/oder Techniken wie AutoEncoder, OneClassClassification und Novelty Detection ermittelt werden.

Gemäß eines weiteren möglichen Ausführungsbeispiels des Verfahrens kann das Bestimmen mindestens eines Merkmals durch das Bildanalysesystem durch Detektieren in einer Abfolge von aufgenommenen Bildern des Mikroskopsystems im regulären Betrieb, von einem sich wiederholenden Merkmal, das in der zeitlich geordneten Abfolge von aufgenommenen Bildern einen Gradienten oder Schwingungen oder sprunghafte, unregelmäßige Abweichungen aufweist, oder das bei jedem Bild identisch auftritt (fehlerhaft), ermittelt werden, sodass eine systematische Abweichung von Normalwerten bzw. Anomalien erkennbar wird.

Dabei kann die Ermittlung eines Normalwertes - oder mehrerer - durch unüberwachtes Lernen vor einem eigentlichen Einsatz des Mikroskopsystems erfolgen oder auch während des regulären Betriebes des Mikroskops.

Der festgestellte Gradient kann entweder einen positiven oder einen negativen Wert aufweisen. Beispielsweise würde sich bei einem über die Zeit schwächer werdenden Laser ein negativer Gradient der Beleuchtungswerte ergeben. Auf diese Weise sind auch schleichende Verschlechterungen, die einem durchschnittlichen Nutzer des Mikroskopsystems normalerweise nicht sofort auffallen, elegant erfassbar. Das für den Laser Gesagte gilt entsprechend auch für andere Sensorwerte bzw. auch Merkmale in den aufgenommenen digitalen Bildern. Damit wären auch systematische Fehler, die einem menschlichen Benutzer normalerweise nicht auffallen, erfassbar, wie beispielsweise einzelne defekte Pixel des Bildsensors, eine leicht schräg sitzende Blende und Ähnliches.

Ein Beispiel für auftretende Schwingungen könnte darin bestehen, dass eine Steuereinheit für den Hauptbildsensor des Mikroskopsystems nicht mehr ordnungsgemäß funktioniert und es so über die Zeit zu schwingungsartigen Ungleichmäßigkeiten bei den aufgenommenen digitalen Bildern kommen kann.

Ein Beispiel für ein sprunghaftes Verhalten könnte eine defekte Beleuchtung mit einem Wackelkontakt sein, wodurch die Intensität der Beleuchtung der Proben variiert - möglicherweise auch ohne dass es das menschliche Auge erkennt.

Gemäß einem weiteren erweiterten möglichen Ausführungsbeispiel des Verfahrens kann die Abfolge von aufgenommenen Bildern des Mikroskopsystems im regulären Betrieb eine ausgewählte Teilmenge aus einer Gesamtheit von aufgenommenen Bildern des Mikroskopsystems im regulären Betrieb sein. Auf diese Weise können verschiedene Filter für die Auswahl verwendet werden. Denkbar wäre jeweils ein Bild pro Tag, Bilder der letzten Tage oder solche Bilder, die einen bestimmten Bildinhalt oder eine bestimmte Applikation betreffen, z.B. aufgenommene bestimmte andere Elemente aus Zellen wie ganze Zellen, Zellkerne, Zellwände etc.

Die aufgenommenen Bilder könnten auch entsprechend mitgespeicherter Metadaten der aufgenommen Bilder ausgewählt werden; die Metadaten jeder Aufnahme können beispielsweise umfassen: Zeit/Datum. Nutzer-Kennzeichnung des jeweiligen Bedieners, verwendete Farbstoffe für die Proben, Probentyp, Art und Anzahl der verwendeten Farbkanäle, Einstellparameter des Lichtpfades, Experimentklasse (bzw. ein kompletter diesbezüglicher Datensatz, allgemeine Experimentdaten (mittels Volltextsuche), usw.

Gemäß einem vorteilhaften Ausführungsbeispiel des Verfahrens kann das Lern-System ein neuronales Netzwerk - oder beispielsweise auch eine Support Vector Machine - sein. Das neuronale Netzwerk kann mittels überwachten Lernens oder auch unüberwachten Lernens trainiert werden. Das Lernen erlaubt dann eine Klassifikation, Detection und/oder Regression (z.B. zur Vorausberechnung eines zukünftigen Wartungszeitpunktes). In Bezug auf das Klassifizieren können MultiClass-Algorithmen oder OneClass-Algorithmen eingesetzt werden. Das neuronale Netzwerk kann als Deep Neural Network als CNN (convolutional NN) oder RNN (recursive NN) ausgeführt sein.

Im Falle des unüberwachten Lernens kann auf Algorithmen wie Deep Autoencoder, One-Class-Classification, MultiClass-Classification oder Novelty Detection zurückgegriffen werden. Grundsätzlich lassen sich alle Lernsysteme einsetzen, die eine Detektion und ein Bestimmen von Anomalien und trainierten Merkmalen in den aufgenommenen digitalen Bildern während des regulären Betriebes erlauben.

### Übersicht über die Figuren

Es sei darauf hingewiesen, dass Ausführungsbeispiele der Erfindung mit Bezug auf unterschiedliche Implementierungskategorien beschrieben sein können. Insbesondere sind einige Ausführungsbeispiele in Bezug auf ein Verfahren beschrieben, während andere Ausführungsbeispiele im Kontext von entsprechenden Vorrichtungen beschrieben sein können. Unabhängig davon ist es einem Fachmann möglich, aus der hier vorstehenden und nachfolgenden Beschreibung - wenn nicht anderweitig darauf hingewiesen ist - mögliche Kombinationen der Merkmale des Verfahrens sowie mögliche Merkmalskombinationen mit dem entsprechenden System zu erkennen und zu kombinieren, auch wenn sie zu unterschiedlichen Anspruchskategorien gehören.

Bereits oben beschriebene Aspekte sowie zusätzliche Aspekte der vorliegenden Erfindung ergeben sich unter anderem aus den beschriebenen Ausführungsbeispielen und aus den zusätzlichen weiteren, durch Bezug auf die Figuren beschriebenen, konkreten Ausgestaltungen.

Bevorzugte Ausführungsbeispiele der vorliegenden Erfindung werden beispielhaft und mit Bezug auf die folgenden Figuren beschrieben:
Fig. 1 stellt ein Blockdiagramm eines Ausführungsbeispiels des erfinderischen Computer-implementierten Verfahrens für eine Feststellung einer Notwendigkeit einer Wartungsmaßnahme für ein Mikroskopsystem dar.
Fig. 2 stellt ein Blockdiagramm von möglichen Erweiterungen des in Fig. 1 dargestellten Computer-implementierten Verfahrens dar.
Fig. 3 zeigt einen Beispielgraph mit zur Auswahl von aufgenommenen Bildern.
Fig. 4 stellt ein Blockdiagramm eines Ausführungsbeispiels des Wartungsüberwachungssystems zur Ermittlung einer Notwendigkeit einer Wartungsmaßnahme für das Mikroskopsystem dar.
Fig. 5 stellt ein Blockdiagramm eines Computersystems dar, welches mindestens Teile des Wartungsüberwachungssystems aufweist.

### Detaillierte Figurenbeschreibung

Im Kontext dieser Beschreibung sollen Konventionen, Begriffe und/oder Ausdrücke folgendermaßen verstanden werden:

Der Begriff " vorausschauende Wartung" - gelegentlich auch vorbeugende Instandhaltung - beschreibt im Zusammenhang mit diesem Dokument wie Wartungsmaßnahmen optimiert werden können, indem nur die Maßnahmen durchgeführt werden, die entsprechend dem Zustand des Gerätes - hier das Mikroskopsystem - zu einem bestimmten Zeitpunkt erforderlich sind. Dabei wird nicht nach einem festen zeitlichen Plan vorgegangen, sondern es wird anhand des festgestellten Zustandes des Mikroskopsystems dynamisch ermittelt, dass eine Wartungsmaßnahme empfohlen ist, um einem Ausfall des Mikroskopsystems vorzubeugen. Die Entscheidungsdaten zur Ableitung eines entsprechenden Signals für einen Hinweis auf eine Wartungsnotwendigkeit einer Komponentengruppe oder einer einzelnen Komponente werden aus dem laufenden Betrieb bzw. des laufenden Einsatzes des Mikroskopsystems gewonnen. Zusätzliche Wartungsmaßnahmen oder besondere Einstellungen sind nicht erforderlich. Damit lassen sich mindestens folgende Ergebnisse erreichen: (i) wenige Maschinenstillstände innerhalb einer Nutzungszeit, (ii) kurze Instandsetzungszeiten, und (iii) geringe Auswirkungen von Stillstandszeiten auf die Nutzungszeiten des Mikroskopsystems. Außerdem lässt sich die Ersatzteilversorgung optimieren, sodann nur eine geringere Zahl an Ersatz- und Verschleißteilen vorrätig gehalten werden muss.

Der Begriff "Wartungsmaßnahme" betrifft hier jede Maßnahme der Pflege, Reparatur, Justierung oder Kalibrierung, wodurch die Nutzung des Mikroskopsystems kontinuierlich gewährleistet wird und Ausfallzeiten minimiert werden. Durch die permanente Beobachtung (Auswertung der aufgenommenen Bilder) beim Einsatz des Mikroskopsystems sind auch elegant schleichende Verschlechterungen gut erfassbar.

Der Begriff "Mikroskopsystem" beschreibt ein optisches bzw. ein optisch-/elektronisches System zur Vergrößerung und Darstellung von kleinen Strukturen. Typischerweise werden die kleinen Strukturen, die durch ein oder abwechselnd auch mehrere Objektive erfasst werden, mittels eines Bildsensors erfasst, wodurch die aufgenommenen Bilder (images) elektronisch und digital weiterverarbeitet werden können. Eine Darstellung von zu untersuchenden Proben erfolgt typischerweise auf einem Bildschirm oder in einem Okular in vergrößerter Form. Ein modernes Hochleistungsmikroskopsystem weist auch weitere Komponenten auf, welche vielfach mechanischer Natur sind und für die Wartungsmaßnahmen von Zeit zu Zeit erforderlich sind. Dazu können ein Probentisch gehören, der in allen drei Raumrichtungen verfahrbar sein kann, Blenden, ein Stativ zur Aufnahme des Probentisches, ein oder mehrere Beleuchtungssysteme, eine Mehrzahl manueller und/oder automatisierter Bedien- und Einstellelemente, usw.

Der Begriff "Bildsensor" beschreibt ein lichtempfindliches elektronisches Halbleiterbauelement, welches bei Mikroskopsystemen häufig als Flächensensor ausgeführt sein kann, bei dem die aufgenommenen Bilder direkt in Pixelinformation umgewandelt werden.

Der Begriff "Probe" beschreibt einen zu untersuchenden Gegenstand, z.B. auf einem Probenträger, wie einer Multiwell-Platte.

Der Begriff "regulärer Betrieb" beschreibt den täglichen oder regelmäßigen Einsatz des Mikroskopsystems durch einen oder mehrere Nutzer - oder auch in einem automatisierten Verfahren - um direkt Nutzdaten in Form von digitalen Bildern von zu untersuchenden Proben zu erzeugen. Der reguläre Betrieb umfasst nicht gesonderte zusätzliche Aufnahmen von digitalen Bildern, die ausschließlich für Wartungszwecke oder anderweitige Kalibrierungszwecke vorgesehen sind. Vielmehr werden die aufgenommenen digitalen Bilder des regulären, täglichen Betriebes genutzt, um daraus entsprechende Wartungsmaßnahmen abzuleiten.

Der Begriff "Bildanalysesystem " beschreibt ein System - häufig im Zusammenwirken mit entsprechender Software - welches ganz allgemein geeignet ist, aus den Pixelinformationen von aufgenommenen Bildern Metadaten zu generieren. Diese Metadaten können auf einer Klassifikation der Pixel zum Segmentieren von Bildteilbereichen beruhen oder es können Regressionstechniken angewendet werden, um beispielsweise auf einen Wert zu extrapolieren. Dabei können auch Techniken des maschinellen Lernens eingesetzt werden.

Der Begriff "Lernsystem" beschreibt ein Hardware-unterstütztes oder Softwaresystem aus dem Bereich der künstlichen Intelligenz, welches angepasst ist zum Lernen aus Beispielen, um so - ohne prozedural vorgegebene und manuell erzeugte Programminstruktionen - beispielsweise Inhalte von Bildern oder deren Teilbereiche abstrakten Begriffen - beispielsweise "gut" oder "schlecht" oder Bedeutungskonstrukten - z.B. eine Segmentierung von Bildinhalten - zuzuordnen. Allgemein betrachtet wird eine Abbildung von Eingangsdaten auf Ausgangsdaten gelernt.

Der Begriff "Trainieren des Lernsystems" bedeutet, dass z.B. ein maschinelles Lernsystem durch eine Mehrzahl von Beispielbildern Parameter in einem beispielsweise neuronalen Netz durch teilweise wiederholtes Auswerten der Beispielbilder so justiert wird, um nach der Trainingsphase auch unbekannte Bilder einer oder mehrerer Kategorie zuzuordnen, mit denen das Lernsystem trainiert worden ist. Die Beispielbilder sind typischerweise annotiert - d.h. mit Metadaten versehen - um basierend auf den Eingangsbildern gewünschte Ergebnisse wie beispielsweise Hinweise auf vorzunehmende Wartungsmaßnahmen zu erzeugen.

Außerdem ist es beispielsweise durch ein Regressionsverfahren möglich, einen Zeitpunkt für eine erforderliche oder angeratene Wartungsmaßnahme bzw. einen erwarteten Ausfallzeitpunkt vorauszubestimmen.

Der Begriff "maschinelles Lernen" ist ein Grundbegriff der künstlichen Intelligenz, wobei z.B. statistische Verfahren verwendet werden, um Computersystemen die Fähigkeit des "Lernens" zu geben. Beispielsweise werden dabei bestimmte Verhaltensmuster innerhalb eines spezifischen Aufgabenbereiches optimiert. Die verwendeten Verfahren versetzen die Systeme des maschinellen Lernens in die Lage, Daten zu analysieren, ohne dass es dazu einer expliziten prozeduralen Programmierung bedarf. Typischerweise handelt es sich bei CNN (Convolutional Neural Network) um ein Beispiel für ein System für maschinelles Lernen, um ein Netzwerk von Knoten, welche als künstliche Neuronen agieren, und um künstliche Verbindungen zwischen den künstlichen Neuronen - sogenannte Links - wobei den künstlichen Verbindungen Parameter - zum Beispiel Gewichtsparameter für die Verbindung - zugeordnet werden können. Während des Trainings des neuronalen Netzes passen sich die Gewichtsparameter der Verbindungen automatisch auf Basis von Eingangssignalen zur Erzeugung eines gewünschten Ergebnisses an. Beim überwachten Lernen werden die als Eingabewerte gelieferten Bilder durch Metadaten (Annotationen) ergänzt, um einen gewünschten Ausgangswert anzuzeigen. Beim unüberwachten Lernen sind solche Annotationen nicht erforderlich.

In diesem Zusammenhang sollen auch rekursive neuronalen Netzwerke (RNN) erwähnt werden, die auch eine Art von Deep Neural Networks darstellen, bei denen die Gewichtsanpassung rekursiv erfolgt, so dass eine strukturierte Vorhersage über Eingangsdaten variabler Größe erzeugt werden kann. Typischerweise werden solche RNNs für sequentielle Eingangsdaten eingesetzt. Dabei kommen - genau wie bei CNNs - neben der vorwärts gerichteten Gewichtsanpassung auch Back-Propagation-Funktionen zum Einsatz. RNNs können auch in der Bildanalyse eingesetzt werden.

Der Begriff "Convolutional Neural Network" beschreibt eine Klasse von künstlichen neuronalen Netzwerken, die auf Feed-Forward-Techniken basieren. Sie werden häufig für Bildanalysen mit Bildern als Eingangsdaten eingesetzt. Hauptbestandteil von Convolutional Neural Networks sind dabei Faltungsschichten (daher der Name), welche eine effiziente Auswertung durch Parameter-Sharing ermöglicht.

Es sei auch erwähnt, dass Deep Neural Networks aus mehreren Schichten unterschiedlicher Funktion: beispielsweise eine Eingangsschicht, eine Ausgangsschicht und einer oder mehrerer dazwischen liegender Schichten beispielsweise für Faltungsoperationen, Anwendung von nichtlinearen Funktionen, einer Dimensionsreduktion, Normalisierungsfunktionen, etc. Die Funktionen können in Software ausgeführt werden oder es können spezielle Hardware-Baugruppen die Berechnung der jeweiligen Funktionswerte übernehmen. Darüber hinaus sind Kombinationen von Hardware und Softwareelementen bekannt.

Der Begriff "Deep Autoencoder" bezeichnet ein Auto-Encoder-System, das auf dem Prinzip eines DNN basiert. Dabei ist es typischerweise ein Ziel beim Einsatz von Auto-Encodern, eine komprimierte Repräsentation (Encoding) für einen Satz Daten zu lernen und auch wesentliche Merkmale zu extrahieren. Dadurch kann er zur Dimensionsreduktion und/oder Anomaliedetektion genutzt werden. Die eigentliche Encoder-Schicht liegt dabei zwischen der Eingangsschicht aus künstlichen Neuronen und der Ausgangsschicht.

In diesen Zusammenhang ist auch der Begriff "One-Class-Classification" einzuordnen. Entsprechende Verfahren sind auch als "Unary Classification" oder "Class-Modelling" bekannt, bei denen versucht wird, bestimmte Objekte in einem aufgenommenen digitalen Bild als eine spezifische Klasse zwischen anderen Objekten einzuordnen. Auch hierfür sind Trainingsläufe erforderlich. Auf diese Weise lassen sich Anomalien in einer Serie von digitalen Bildern erkennen.

Der Begriff "Novelty Detection" beschreibt einen Mechanismus durch den ein "intelligentes" System (beispielsweise ein intelligenter Organismus) ein ankommendes Sensormuster als bisher unbekannt einordnen kann. Dieses Prinzip lässt sich auch auf künstliche neuronale Netzwerke anwenden. Wenn ein am künstlichen neuronalen Netzwerk ankommendes Sensormuster kein Ausgangssignal erzeugt, bei dem die Erkennungswahrscheinlichkeit über einem vorgegebenen (oder dynamisch angepassten) Schwellwert liegt, oder eine Mehrzahl von Ausgangssignalen erzeugt, bei denen die Erkennungswahrscheinlichkeiten in etwa gleich groß sind, kann das ankommende Sensormuster - beispielsweise ein digitales Bild - als eines mit einem neuen Inhalt (Novelty) klassifiziert werden.

Wird hingegen einem durch bekannte Beispielbilder trainiertes neuronales Netz (beispielsweise als Autoencoder konfiguriert) ein neues Beispielbild zugeführt und durchläuft es den Autoencoder, so sollte dieser in der Lage sein, das neue Beispielbild am Ausgang wieder zu rekonstruieren. Dies ist deshalb möglich, weil beim Durchlaufen durch den Autoencoder das neue Beispielbild stark komprimiert wird, um es danach durch das neuronale Netz wieder zu expandieren/rekonstruieren. Wenn das neue Eingangsbild mit dem expandierten/rekonstruierten Bild (weitgehend) übereinstimmt, entsprach das neue Beispielbild einem bekannten Muster bzw. es weist eine hohe Ähnlichkeit zu den Inhalten der Trainingsbilddatenbank auf. Wenn sich beim Vergleich des neuen Beispielbildes gegenüber dem expandierten/rekonstruierten Bild ein deutlicher Unterschied zeigt, d.h. wenn sind die Rekonstruktionsfehler signifikant sind, dann handelt es sich bei dem Beispielbild um eines mit einer bisher unbekannten Verteilung (Bildinhalt). D.h. kann ein neuronales Netz die Datenverteilung nicht abbilden, so handelt es sich um eine Anomalie im Vergleich zu der bekannten, als Normalfall angenommenen Datenbasis.

Im Folgenden wird eine detaillierte Beschreibung der Figuren angegeben. Dabei versteht es sich, dass alle Details und Anweisungen in den Figuren schematisch dargestellt sind. Zunächst wird ein Blockdiagramm eines Ausführungsbeispiels des erfindungsgemäßen Computer-implementierten Verfahrens zum Ermitteln einer Notwendigkeit für vorausschauende Wartung für ein Mikroskopsystem dargestellt. Nachfolgend werden weitere Ausführungsbeispiele bzw. Ausführungsbeispiele für das entsprechende System beschrieben:

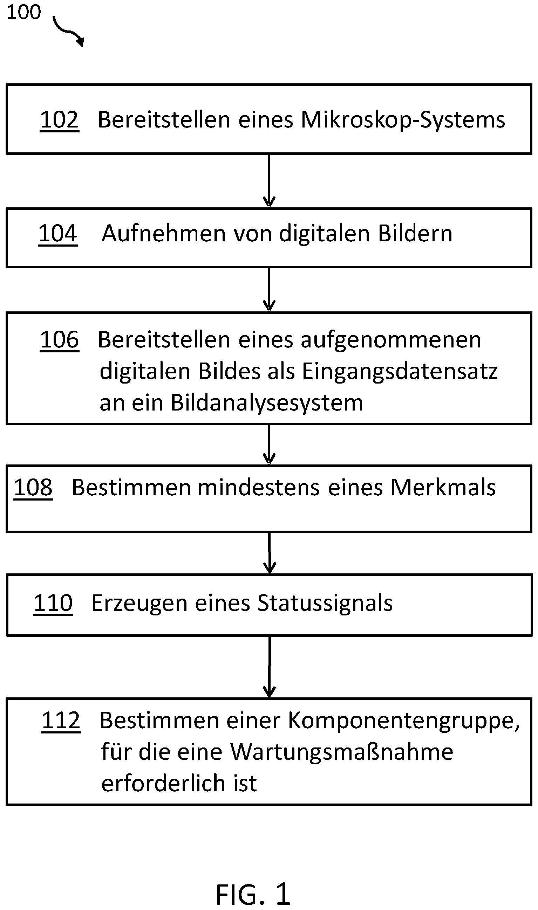

**Fig. 1** stellt ein Blockdiagramm eines Ausführungsbeispiels des erfinderischen Computer-implementierten Verfahrens für eine Feststellung eine Notwendigkeit einer Wartungsmaßnahme für ein Mikroskopsystem dar. Das Verfahren weist ein Bereitstellen 102 eines Mikroskopsystems, das einen Bildsensor zur Aufnahme von digitalen Bildern einer Probe aufweist, ein Aufnehmen 104 von digitalen Bildern mittels des Bildsensors während eines regulären Betriebes des Mikroskopsystems und ein Bereitstellen 106 mindestens eines aufgenommenen digitalen Bildes als mindestens einen Eingangsdatensatz an ein Bildanalysesyssystem auf.

Weiterhin weist das Verfahren auf: Bestimmen 108 mindestens eines Merkmals durch das Bildanalysesystem in dem mindestens einen aufgenommenen digitalen Bild, wobei das Merkmal zu einer Fehlfunktion des Mikroskopsystems im regulären Betrieb in Korrelation steht, Erzeugen 110 eines Statussignals für einen Zustand des Mikroskopsystems durch das Bildanalysesystem auf Basis des mindestens einen digitalen Bildes und des mindestens einen darin enthaltenen Merkmals und Bestimmen 112 durch Nutzung des Statussignals einer Komponentengruppe des Mikroskopsystems, für die eine Wartungsmaßnahme erforderlich ist. Diese erforderliche oder vorzunehmende Wartungsmaßnahme wird dem Anwender angezeigt. Das kann in textlicher Form geschehen oder als graphische Darstellung, indem eine Abbildung des Mikroskopsystems dargestellt wird und die zu wartende Komponente besonders markiert dargestellt wird. Außerdem kann eine Angabe zur Art der Wartungsmaßnahme ausgegeben werden (z.B. optisches System reinigen, Beleuchtung ersetzen, etc.).

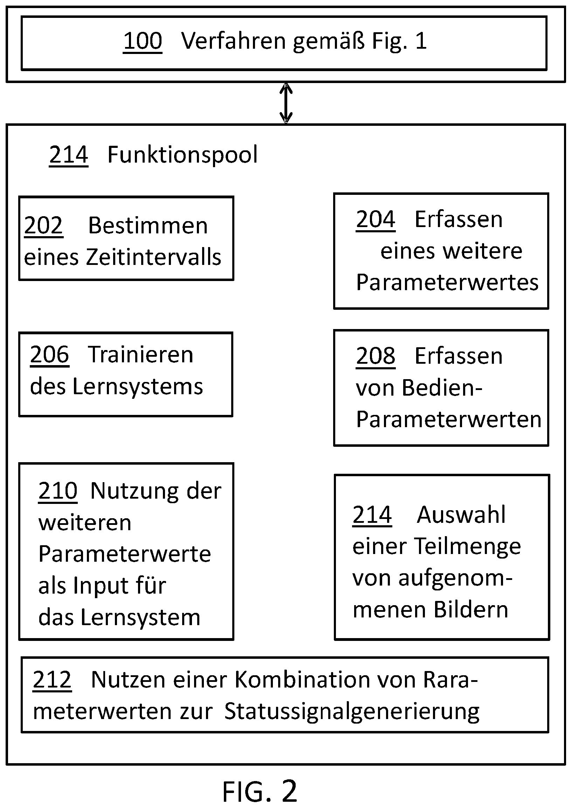

**Fig. 2** stellt ein Blockdiagramm von möglichen Erweiterungen des in Fig. 1 dargestellten Computer-implementierten Verfahrens dar. Dazu steht ein Funktionspool 214 zur Verfügung, aus dem anforderungsgemäß zusätzliche Funktionen in das Verfahren 100 nach Fig. 1 eingebunden werden können. Dazu gehören Bestimmen 202 eines Zeitintervalls für eine erforderliche oder empfohlene Wartungsmaßnahme am Mikroskopsystem, ein Erfassen 204 weiterer Parameterwerte von Komponenten des Mikroskopsystems, Trainieren 206 des Lernsystems in unterschiedlicher Form (überwachtes/unüberwachtes Lernen), Erfassen 208 von Parameterwerten von Bedienelementen - ggfs. auch zeitabhängig - Nutzen 210 einer Kombination von Parameterwerten zur Statussignalgenerierung für eine ermittelte Wartungsmaßnahme für das Mikroskopsystem sowie Nutzung 212 der weiteren Parameterwerte als Eingangsdaten für das Lernsystem. Dazu werden die weiteren Parameterwerte - vorteilhafterweise als Zeitreihe - dem Lernsystem als Eingangsdaten zur Verfügung gestellt. Außerdem steht im Funktionspool die Funktion "Auswahl einer Teilmenge der aufgenommenen Bilder" zur Verfügung. Die Auswahl kann den oben genannten Selektionsparametern erfolgen.

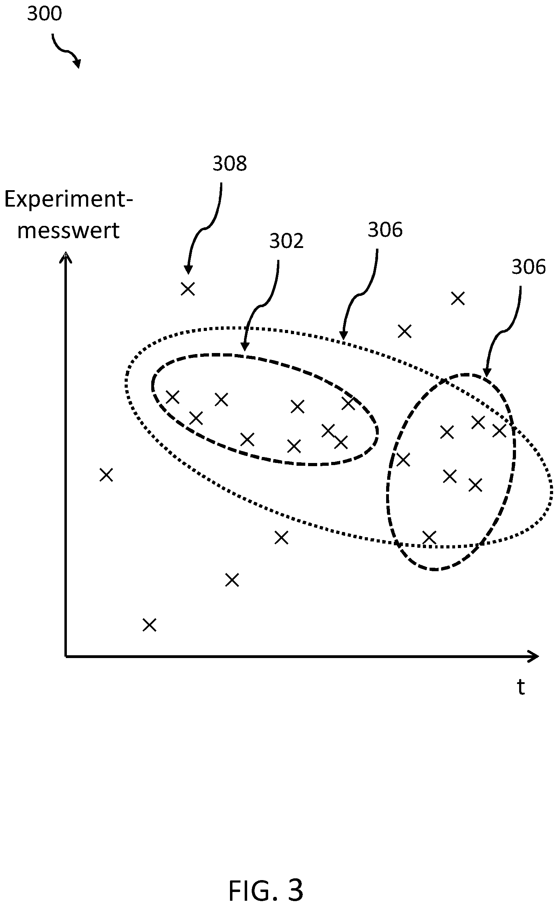

**Fig. 3** zeigt einen Beispielgraph 300 mit zur Auswahl von aufgenommenen Bildern. Auf der x-Achse ist die Zeit (Zeit/datum-Kombination) aufgetragen, zu der die aufgenommenen Bilder erzeugt wurden bzw. an dem das entsprechende Experiment durchgeführt wurde. Auf der y-Achse sind beispielhaft Experimentmesswerte aufgetragen. Jeder Messpunkt 308 repräsentiert jeweils ein aufgenommenes Bild. Die Auswahl der Bilder kann dann entsprechend unterschiedlichen Kriterien (s.o.) vorgenommen werden. Dabei ergeben sich je nach Auswahlkriterien unterschiedliche Gruppen 302, 306 und 308 von aufgenommenen Bildern, wie die beispielhaften Einkreisungen illustrieren.

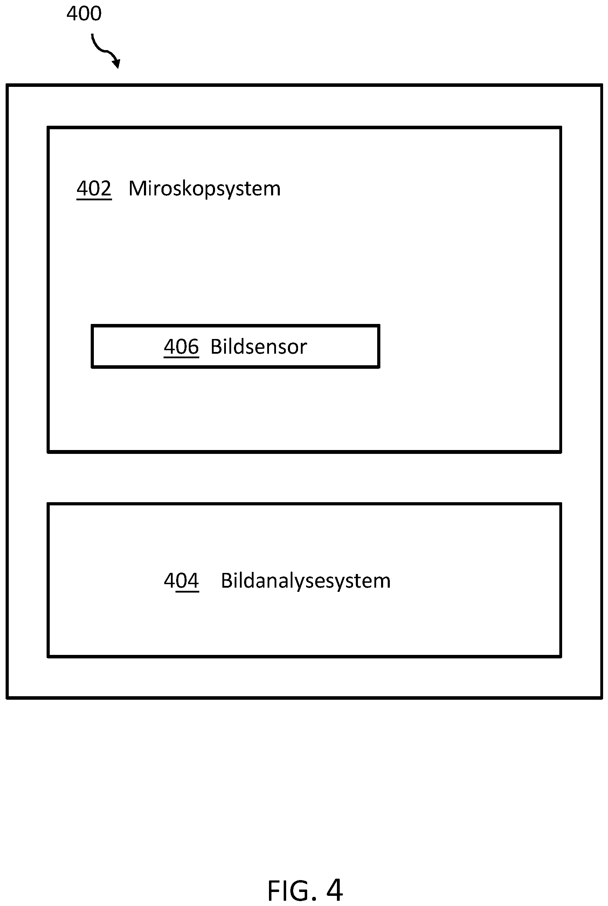

**Fig. 4** stellt ein Blockdiagramm eines Ausführungsbeispiels des Wartungsüberwachungssystems 400 zur Ermittlung einer Notwendigkeit einer Wartungsmaßnahme für das Mikroskopsystem dar. Dabei weist das Wartungsüberwachungssystem auf: ein Mikroskopsyskopsystem 402, das einen Bildsensor 406 zur Aufnahme von digitalen Bildern einer Probe aufweist, wobei der Bildsensor 406 zum Aufnehmen von digitalen Bildern während eines regulären Betriebes des Mikroskopsystems 402 genutzt wird.

Darüber hinaus weist das Wartungsüberwachungssystem ein Bildanalysesystem 404 auf, welches angepasst ist zum Empfangen mindestens eines aufgenommenen digitalen Bildes als mindestens einen Eingangsdatensatz. Das Bildanalysesystem 404 ist weiterhin angepasst zum Bestimmen mindestens eines Merkmals in dem mindestens einen aufgenommenen digitalen Bild, wobei das Merkmal zu einer Fehlfunktion des Mikroskopsystems im regulären Betrieb in Korrelation steht, ein Erzeugen eines Statussignals für einen Zustand des Mikroskopsystems durch das Bildanalysesystem auf Basis des mindestens einen digitalen Bildes und des mindestens einen darin enthaltenen Merkmals, und Bestimmen durch Nutzung des Statussignals einer Komponentengruppe des Mikroskopsystems, für die eine Wartungsmaßnahme erforderlich ist.

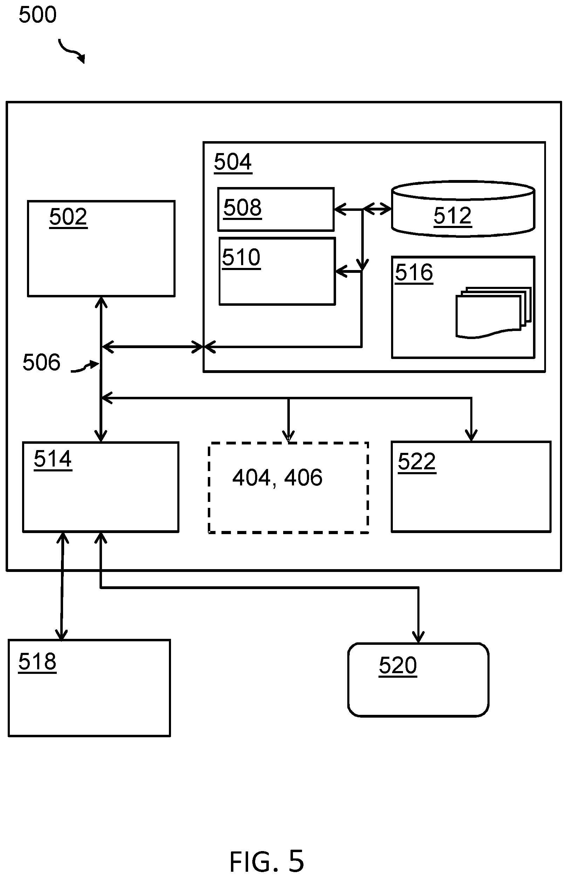

**Fig. 5** stellt ein Blockdiagramm eines Computersystems dar, welches mindestens Teile des Wartungsüberwachungssystems aufweisen kann. Ausführungsformen des hier vorgeschlagenen Konzepts können grundsätzlich mit praktisch jedem Typ von Computer, unabhängig von der darin verwendeten Plattform zur Speicherung und/oder Ausführung von Programmcodes, genutzt werden. Fig. 5 stellt beispielhaft ein Computersystem 500 dar, welches zur Ausführung von Programmcode entsprechend des hier vorgestellten Verfahrens geeignet ist. Ein bereits im Mikroskopsystem vorhandenes Computer-System kann auch - ggfs. mit entsprechenden Erweiterungen - als Computersystem für die Ausführung des hier vorgestellten Konzeptes dienen.

Das Computersystem 500 weist eine Mehrzahl von allgemein nutzbaren Funktionen (general purpose functions) auf. Dabei kann das Computersystem ein Tablet-Computer, ein Laptop-/Notebook-Computer, ein anderes tragbares oder mobiles elektronisches Gerät, ein Mikroprozessorsystem, ein Mikroprozessor-basiertes System, ein Smartphone oder Computersystem mit speziell eingerichteten Sonderfunktionen sein. Das Computersystem 500 kann eingerichtet sein zur Ausführung von Computer-System ausführbaren Anweisungen - wie beispielsweise Programmmodulen - die ausgeführt werden können, um Funktionen der hier vorgeschlagenen Konzepte umzusetzen. Dazu können die Programmmodule Routinen, Programme, Objekte, Komponenten, Logik, Datenstrukturen usw. aufweisen, um bestimmte Aufgaben oder bestimmte abstrakte Datentypen zu implementieren.

Die Komponenten des Computersystems können Folgendes aufweisen: einen oder mehrere Prozessoren oder Verarbeitungseinheiten 502, ein Speichersystem 504 und ein Bussystem 506, welches verschiedene Systemkomponenten inklusive des Speichersystems 504 mit dem Prozessor 502 verbindet. Typischerweise weist das Computersystem 400 eine Mehrzahl von durch das Computersystem 400 zugreifbaren flüchtigen oder nicht-flüchtigen Speichermedien auf. Im Speichersystem 404 können die Daten und/oder Instruktionen (Befehle) der Speichermedien in flüchtiger Form - wie beispielsweise in einem RAM (random access memory) 408 - gespeichert sein, um von dem Prozessor 402 ausgeführt zu werden. Diese Daten und Instruktionen realisieren einzelne oder mehrere Funktionen bzw. 4des hier vorgestellten Konzeptes. Weitere Komponenten des Speichersystems 504 können ein Permanentspeicher (ROM) 510 und ein Langzeitspeicher 512 sein, in dem die Programmmodule und Daten (Bezugszeichen 516) gespeichert sein können.

Das Computersystem weist zur Kommunikation eine Reihe von dedizierten Vorrichtungen (Tastatur 518, Maus/Pointing Device (nicht dargestellt), Bildschirm 520, usw.) auf. Diese dedizierten Vorrichtungen können auch in einem berührungsempfindlichen Display vereint sein. Ein separat vorgesehener I/O-Controller 514 sorgt für einen reibungslosen Datenaustausch zu externen Geräten. Zur Kommunikation über ein lokales oder globales Netzwerk (LAN, WAN, beispielsweise über das Internet) steht ein Netzwerkadapter 522 zur Verfügung. Auf dem Netzwerkadapter kann durch andere Komponenten des Computersystems 500 über das Bussystem 506 zugegriffen werden. Dabei versteht es sich, dass - obwohl nicht dargestellt - auch andere Vorrichtungen an das Computersystem 500 angeschlossen sein können.

Darüber hinaus können mindestens Teile des Wartungsüberwachungssystems 400 (vgl. Fig. 3) an das Bussystem 506 angeschlossen sein, wie beispielsweise der Bildsensor 406 und/oder das Bildanalysesystem 404. Die digitalen Bilddaten des Bildsensors 406 können auch durch ein gesondertes Vorverarbeitungssystem (nicht dargestellt) aufbereitet sein.

Die Beschreibung der verschiedenen Ausführungsbeispiele der vorliegenden Erfindung wurde zum besseren Verständnis dargestellt. Die hier genutzte Terminologie wurde so gewählt, um die grundsätzlichen Prinzipien der Ausführungsbeispiele am besten zu beschreiben und sie dem Fachmann leicht zugänglich zu machen.

Das hier vorgestellte Prinzip kann sowohl als System, als Verfahren, Kombinationen davon und/oder auch als Computerprogrammprodukt verkörpert sein. Dabei kann das Computerprogrammprodukt ein (oder mehrere) Computer-lesbare/s Speichermedium/-medien aufweisen, welches Computer-lesbare Programminstruktionen aufweist, um einen Prozessor oder ein Steuerungssystem dazu zu veranlassen, verschiedene Aspekte der vorliegenden Erfindung auszuführen.

Als Medien kommen elektronische, magnetische, optische, elektromagnetische, Infrarot-Medien oder Halbleitersysteme als Weiterleitungsmedium zum Einsatz; beispielsweise SSDs (solid state device/drive als Festkörperspeicher), RAM (Random Access Memory) und/oder ROM (Read-Only Memory), EEPROM (Electrically Eraseable ROM) oder eine beliebige Kombination davon. Als Weiterleitungsmedien kommen auch sich ausbreitende elektromagnetische Wellen, elektromagnetische Wellen in Wellenleitern oder anderen Übertragungsmedien (z.B. Lichtimpulse in optischen Kabeln) oder elektrische Signale, die in Drähten übertragen werden, in Frage.

Das Computer-lesbare Speichermedium kann eine verkörpernde Vorrichtung sein, welche Instruktionen für eine Nutzung durch ein Instruktionsausführungsgerät vorhält bzw. speichert. Die Computer-lesbaren Programminstruktionen, die hier beschrieben sind, können auch auf ein entsprechendes Computersystem heruntergeladen werden, beispielsweise als (Smartphone-) App von einem Service-Provider über eine kabelbasierte Verbindung oder ein Mobilfunknetzwerk.

Die Computer-lesbaren Programminstruktionen zur Ausführung von Operationen der hier beschriebenen Erfindung können maschinenabhängig sein oder maschinenunabhängige Instruktionen, Microcode, Firmware, Status-definierende Daten oder jeglicher Source-Code oder Objektcode sein, der beispielsweise in C++, Java oder ähnlichen bzw. in konventionellen prozeduralen Programmiersprachen wie beispielsweise der Programmiersprache "C" oder ähnlichen Programmiersprachen geschrieben sein. Die Computer-lesbaren Programminstruktionen können komplett durch ein Computersystem ausgeführt werden. In einigen Ausführungsbeispielen können es auch elektronische Schaltkreise wie beispielsweise programmierbare Logikschaltkreise, Feld-programmierbare Gate Arrays (FPGA) oder programmierbare Logik-Arrays (PLA) sein, die die Computer-lesbaren Programminstruktionen durch Nutzung von Statusinformationen der Computer-lesbaren Programminstruktionen ausführen, um die elektronischen Schaltkreise entsprechend Aspekten der vorliegenden Erfindung zu konfigurieren bzw. zu individualisieren.

Darüber hinaus ist die hier vorgestellte Erfindung mit Bezug auf Flussdiagramme und/oder Blockdiagramme von Verfahren, Vorrichtungen (Systemen) und Computerprogrammprodukten entsprechend Ausführungsbeispielen der Erfindung dargestellt. Es sei darauf hingewiesen, dass praktisch jeder Block der Flussdiagramme und/oder Blockdiagramme als Computer-lesbare Programminstruktionen ausgestaltet sein kann.

Die Computer-lesbaren Programminstruktionen können einem General-Purpose-Computer, einem Spezialcomputer oder einem anderweitig programmierbaren Datenverarbeitungssystem zur Verfügung gestellt werden, um eine Maschine herzustellen, so dass die Instruktionen, welche durch den Prozessor oder den Computer oder andere programmierbare Datenverarbeitungsvorrichtungen ausgeführt werden, Mittel erzeugen, um die Funktionen oder Vorgänge, die in dem Flussdiagramm und/oder Blockdiagrammen dargestellt sind, zu implementieren. Diese Computer-lesbaren Programminstruktionen können entsprechend auch auf einem Computer-lesbaren Speichermedium gespeichert werden.

In diesem Sinne kann jeder Block in dem dargestellten Flussdiagramm oder den Blockdiagrammen ein Modul, ein Segment oder Anteile an Instruktionen darstellen, welche mehrere ausführbare Instruktionen zur Implementierung der spezifischen Logikfunktion darstellt.

### BEZUGSZEICHEN

- 100: Verfahren
- 102: Verfahrensschritt
- 104: Verfahrensschritt
- 106: Verfahrensschritt
- 108: Verfahrensschritt
- 110: Verfahrensschritt
- 112: Verfahrensschritt
- 202, ... 216: Verfahrensschritte möglicher Erweiterungen
- 300: Graph zur Auswahl von Bilder
- 302, 304, 306: mögliche ausgewählte Gruppen von Bilder
- 308: Beilspielmesswert
- 400: Wartungsüberwachungssystem
- 402: Mikroskopsystem
- 404: Bildanalysesystem
- 406: Bildsensor
- 500: Computersystem
- 502: Prozessor
- 504: Speichersystem
- 506: Bussystem
- 508: RAM
- 510: ROM
- 512: Langzeitspeicher
- 514: I/O-Controller
- 516: Programmmodule bzw. und Daten
- 518: Tastatur
- 520: Bildschirm
- 522: Netzwerkadapter

## Patentansprüche

1. Ein Computer-implementiertes Verfahren (100) zum Ermitteln einer Notwendigkeit für vorausschauende Wartung für ein optisches Mikroskopsystem (402), das Verfahren (100) aufweisend
- Bereitstellen (102) eines optischen Mikroskopsystems (402), das einen Bildsensor (406) zur Aufnahme von digitalen Bildern einer Probe aufweist,
- Aufnehmen (104) von digitalen Bildern mittels des Bildsensors (406) während eines regulären Betriebes des optischen Mikroskopsystems (402),
- Bereitstellen (106) mindestens eines aufgenommenen digitalen Bildes als mindestens einen Eingangsdatensatz an ein Bildanalysesystem (404),
- Bestimmen (108) mindestens eines Merkmals durch das Bildanalysesystem (404) in dem mindestens einen aufgenommenen digitalen Bild, wobei das Merkmal zu einer Fehlfunktion des optischen Mikroskopsystems (402) im regulären Betrieb in Korrelation steht,
- Erzeugen (110) eines Statussignals für einen Zustand des optischen Mikroskopsystems (402) durch das Bildanalysesystem (404) auf Basis des mindestens einen digitalen Bildes und des mindestens eines darin enthaltenen Merkmals, und
- Bestimmen (112), durch Nutzung des Statussignals, einer Komponentengruppe des optischen Mikroskopsystems (402), für die eine Wartungsmaßnahme erforderlich ist.

2. Das Verfahren (100) gemäß Anspruch 1, wobei das Bildanalysesystem (404) ein Lernsystem mit Eigenschaften des maschinellen Lernens ist, und wobei das Verfahren (100) zusätzlich aufweist:
- Trainieren (206) des Lernsystems mit einem Satz von digitalen Bildern mittels maschinellen Lernens zur Generierung eines Lernmodells zur Erkennung des mindestens einen Merkmals in einem der aufgenommenen digitalen Bilder von Proben im regulären Betrieb des Mikroskopsystems(402).

3. Das Verfahren (100) gemäß Anspruch 2, wobei das Lernsystem ein System zum überwachten Lernen ist und wobei die Bilder des Satzes von digitalen Bildern zum überwachten Lernen zur Generierung des Lernmodells mit Metadaten annotiert sind.

4. Das Verfahren (100) gemäß Anspruch 3, wobei die Metadaten mindestens eines ausgewählt aus der Gruppe bestehend aus einem Zeitintervallwert, in dem die Wartungsmaßnahme erforderlich ist, einem erwarteten Ausfallzeitpunkt einer Komponente des Mikroskopsystems (402), eine numerische Zustandsangabe einer einzelnen Komponente des Mikroskopsystems (402), und eine Benennung einer defekten Komponente des Mikroskopsystems (402) aufweist.

5. Das Verfahren (100) gemäß einem der vorangegangenen Ansprüche, wobei das Bestimmen der Komponentengruppe des Mikroskopsystems (402) zusätzlich aufweist:
- Bestimmen eines Zeitintervallwertes, in dem die Wartungsmaßnahme erforderlich ist.

6. Das Verfahren (100) gemäß einem der vorangegangenen Ansprüche, bei dem für das Erzeugen des Statussignals durch das Bildanalysesystem (404) mindestens ein weiterer erfasster Sensorwert des Mikroskopsystems (402), welcher/welche als zusätzlicher/e Eingangsdaten für das Lernsystem genutzt werden.

7. Das Verfahren (100) gemäß einem der vorangegangenen Ansprüche, wobei das mindestens eine enthaltene Merkmal in dem mindestens einen aufgenommenen digitalen Bild im regulären Betrieb mindestens eines ist aus der Gruppe bestehend aus Streifen, Jitter, ungleichmäßige Helligkeit, reduzierte Auflösung, überhöhtes Bildrauschen, geringes Signal-zu-Hintergrund-Verhältnis, geringe Laserleistung, reduzierte Empfindlichkeit und Fehlstellen im digitalen Bild aufweist.

8. Das Verfahren (100) gemäß einem der Ansprüche 2 bis 7, wobei das Lernmodel für ein einzelnes Mikroskopsystem (402) generiert wird oder für eine Mehrzahl von Mikroskopsystemen (402).

9. Das Verfahren (100) gemäß einem der vorangegangenen Ansprüche, wobei während des regulären Betriebes des Mikroskopsystems (402) mindestens ein Bedienparameterwert eines Bedienungselementes des Mikroskopsystems (402) gemessen wird, der zusätzlich bei der Bestimmung des Statussignals genutzt wird.

10. Das Verfahren (100) gemäß einem der Ansprüche 2 bis 9, bei dem das Lernmodell zusätzlich zur Erkennung des mindestens einen Merkmals mindestens eine Kategorie betrifft, die ausgewählt ist aus der Gruppe bestehend aus: Klassifikation von Servicestufen des Mikroskopsystems (402), Regression auf erwarteten Ausfallzeitpunkt des Mikroskopsystems (402), Korrelation des mindestens einen Merkmals oder eine Kombination mehrerer Merkmale des digitalen Bildes mit Bestimmung eines Wartungserfordernisses einer zuordenbaren Komponente oder Komponentengruppe des Mikroskopsystems (402).

11. Das Verfahren (100) gemäß einem der vorangegangenen Ansprüche, wobei das Erzeugen des Statussignals zusätzlich eine Kombination von Steuersignalen berücksichtigt, wobei jeweils eines der Steuersignale sich mindestens auf eines der folgenden bezieht: Fehlerquelle im Mikroskopsystem (402), Vertrauensfaktor des Signals der Fehlerquelle, Art eines Fehlers, Zahlenwert einer Qualitätseinbuße, erforderliche Wartungsmaßnahme, Zeitintervall für eine Wartungsmaßnahme, Angabe der Komponente, für die eine Wartungsmaßnahme erforderlich ist, Information über alternative Mikroskopsystem-Einstellungen, um eine Fehlfunktion einer Komponente mindestens teilweise auszugleichen, Information über eine Fehlerquelle einer Positionierung oder Fehlpräparation der Probe.

12. Das Verfahren (100) gemäß einem der Ansprüche 2 bis 11, bei dem das Statussignal durch das Lernsystem zusätzlich dadurch bestimmt wird, dass ein Vergleich mit im regelmäßigen Betrieb erfassten Zeitfolgen einer Kombination von Sensorparametern von Bedienungselementen des Mikroskopsystems (402) mit Vergleichswerten der Kombination von Sensorparametern von Bedienungselementen des Mikroskopsystems (402) eine signifikante Abweichung ergibt.

13. Das Verfahren (100) gemäß einem der vorangegangenen Ansprüche, bei dem das Bestimmen mindestens eines Merkmals durch das Bildanalysesystem (404) vorgenommen wird, durch
- Detektieren, in einer Abfolge von aufgenommenen Bildern des Mikroskopsystems (402) im regulären Betrieb, von einem sich wiederholenden Merkmal, das in der zeitlich geordneten Abfolge von aufgenommenen Bildern einen Gradienten, Schwingungen oder ein sprunghaftes Verhalten aufweist oder das bei jedem Bild identisch auftritt.

14. Das Verfahren (100) gemäß Anspruch 13, wobei die Abfolge von aufgenommenen Bildern des Mikroskopsystems (402) im regulären Betrieb eine ausgewählte Teilmenge aus einer Gesamtheit von aufgenommenen Bildern des Mikroskopsystems (402) im regulären Betrieb ist.

15. Das Verfahren gemäß einem der Ansprüche 2 bis 14, wobei das Lernsystem ein neuronales Netzwerk ist.

16. Das Verfahren gemäß einem der Ansprüche 13 oder 15, wobei das neuronale Netzwerk auf mindestens einer der folgenden Technologien basiert: Deep Autoencoder, One-Class-Classification oder Novelty Detection.

17. Ein Wartungsüberwachungssystem (400) für vorausschauende Wartung für ein optisches Mikroskopsystem (402), das Wartungsüberwachungssystem (400) aufweisend
- ein optischen Mikroskopsystem (402), das einen Bildsensor (406) zur Aufnahme von digitalen Bildern einer Probe aufweist, wobei der Bildsensor zum Aufnehmen von digitalen Bildern während eines regulären Betriebes des optischen Mikroskopsystems (402) angepasst ist,
- ein Bildanalysesystem (404) angepasst zum Empfangen mindestens eines aufgenommenen digitalen Bildes als mindestens einen Eingangsdatensatz an das Bildanalysesystem, wobei das Bildanalysesystem (404) angepasst ist zum
- Bestimmen mindestens eines Merkmals durch das Bildanalysesystem (404) in dem mindestens einen aufgenommenen digitalen Bild, wobei das Merkmal zu einer Fehlfunktion des optischen Mikroskopsystems (402) im regulären Betrieb in Korrelation steht,
- Erzeugen eines Statussignals für einen Zustand des optischen Mikroskopsystems (402) durch das Bildanalysesystem (404) auf Basis des mindestens einen digitalen Bildes und des mindestens einen darin enthaltenen Merkmals, und
- Bestimmen, durch Nutzung des Statussignals, einer Komponentengruppe des optischen Mikroskopsystems, für die eine Wartungsmaßnahme erforderlich ist.

18. Ein Computerprogrammprodukt zum Ermitteln einer vorausschauenden Wartung für ein optischen Mikroskopsystem (402) mit einem Bildsensor zur Aufnahme von digitalen Bildern einer Probe, wobei das Computerprogrammprodukt ein Computer-lesbares Speichermedium aufweist, welches darauf gespeicherte Programminstruktionen aufweist, wobei die Programminstruktionen durch einen oder mehrere Computer (400) oder Steuereinheiten ausführbar sind und den einen oder die mehreren Computer (400) oder Steuereinheiten dazu veranlasst, Folgendes auszuführen:
- Aufnehmen (104) von digitalen Bildern mittels des Bildsensors während eines regulären Betriebes des optischen Mikroskopsystems,
- Weitergabe (106) mindestens eines aufgenommenen digitalen Bildes als mindestens einen Eingangsdatensatz an ein Bildanalysesystem,
- Bestimmen (108) mindestens eines Merkmals durch das Bildanalysesystem in dem mindestens einen aufgenommenen digitalen Bild, wobei das Merkmal zu einer Fehlfunktion des optischen Mikroskopsystems im regulären Betrieb in Korrelation steht,
- Erzeugen (110) eines Statussignals für einen Zustand des optischen Mikroskopsystems (402) durch das Bildanalysesystem (404) auf Basis des mindestens einen digitalen Bildes und des mindestens eines darin enthaltenen Merkmals, und
- Bestimmen (112) durch Nutzung des Statussignals einer Komponentengruppe des optischen Mikroskopsystems (402), für die eine Wartungsmaßnahme erforderlich ist.

## Claims

1. Computer-implemented method (100) for ascertaining a need for predictive maintenance for an optical microscope system (402), the method (100) comprising
- providing (102) an optical microscope system (402), which comprises an image sensor (406) for recording digital images of a sample,
- recording (104) digital images using the image sensor (406) during regular operation of the optical microscope system (402),
- providing (106) at least one recorded digital image as at least one input data set to an image analysis system (404),
- determining (108) at least one feature by the image analysis system (404) in the at least one recorded digital image, wherein the feature correlates to a malfunction of the optical microscope system (402) during regular operation,
- producing (110) a status signal for a state of the optical microscope system (402) by way of the image analysis system (404) based on the at least one digital image and the at least one feature contained therein, and
- determining (112), by using the status signal, a component group of the optical microscope system (402) for which a maintenance procedure is necessary.

2. Method (100) according to Claim 1, wherein the image analysis system (402) is a learning system having properties of machine learning, and wherein the method (100) additionally comprises:
- training (206) the learning system using a set of digital images by way of machine learning for generating a learning model for identifying the at least one feature in one of the recorded digital images of samples during regular operation of the microscope system (402).

3. Method (100) according to Claim 2, wherein the learning system is a system for supervised learning and, wherein the images of the set of digital images for supervised learning are annotated with metadata for generating the learning model.

4. Method (100) according to Claim 3, wherein the metadata is at least one selected from the group consisting of a time interval value, in which the maintenance procedure is necessary, an expected time of failure of a component of the microscope system (402), a numerical state indication of an individual component of the microscope system (402), and naming of a defective component of the microscope system (402).

5. Method (100) according to one of the preceding claims, wherein the determining of the component group of the microscope system (402) additionally comprises:
- determining a time interval value in which the maintenance procedure is necessary.

6. Method (100) according to one of the preceding claims, wherein at least one further captured sensor value of the microscope system (402) which are used as additional input data for the learning system for producing the status signal by way of the image analysis system (404).

7. Method (100) according to one of the preceding claims, wherein the at least one contained feature in the at least one recorded digital image during regular operation is at least one from the group consisting of stripes, jitters, irregular brightness, reduced resolution, excess image noise, low signal-to-background ratio, low laser output, reduced sensitivity and imperfections in the digital image.

8. Method (100) according to one of Claims 2 to 7, wherein the learning model is generated for an individual microscope system (402) or for a plurality of microscope systems (402).

9. Method (100) according to one of the preceding claims, wherein at least one operating parameter value of an operating element of the microscope system (402) which is additionally used in the determination of the status signal is measured during regular operation of the microscope system (402).

10. Method (100) according to one of Claims 2 to 9, wherein the learning model additionally for identifying the at least one feature relates to at least one category, which is selected from the group consisting of: classification of service stages of the microscope system (402), regression to expected time of failure of the microscope system (402), correlation of the at least one feature or a combination of a plurality of features of the digital image with determination of a maintenance requirement of an assignable component or component group of the microscope system (402).

11. Method (100) according to one of the preceding claims, wherein the generation of the status signal additionally takes into account a combination of control signals, wherein in each case one of the control signals relates at least to one of the following: error source in the microscope system (402), confidence factor of the signal of the error source, type of an error, number value of a loss in quality, necessary maintenance procedure, time interval for a maintenance procedure, indication of the component for which a maintenance procedure is necessary, information relating to alternative microscope system settings to at least partially compensate a malfunction of a component, information relating to an error source of positioning or incorrect preparation of the sample.

12. Method (100) according to one of Claims 2 to 11, wherein the status signal is determined by the learning system additionally in that a comparison with time series, captured during regular operation, of a combination of sensor parameters of operating elements of the microscope system (402) to comparison values of the combination of sensor parameters of operating elements of the microscope system (402) provides a significant deviation.

13. Method (100) according to one of the preceding claims, wherein the determining of at least one feature is performed by the image analysis system (404) by way of
- detecting, in a sequence of recorded images of the microscope system (402) during regular operation, a repeating feature which has in the chronologically arranged sequence of recorded images a gradient, fluctuations or an abrupt behaviour or which appears identically in each image.

14. Method (100) according to Claim 13, wherein the sequence of recorded images of the microscope system (402) during regular operation is a selected subset from a totality of recorded images of the microscope system (402) during regular operation.

15. Method according to one of Claims 2 to 14, wherein the learning system is a neural network.

16. Method according to one of Claims 13 of 15, wherein the neural network is based on at least one of the following technologies: deep autoencoder, one-class classification or novelty detection.

17. Maintenance monitoring system (400) for predictive maintenance for an optical microscope system (402), the maintenance monitoring system (400) comprising
- an optical microscope system (402) comprising an image sensor (406) for recording digital images of a sample, wherein the image sensor is adapted for recording digital images during regular operation of the optical microscope system (402),
- an image analysis system (404), which is adapted for receiving at least one recorded digital image as at least one input data set to the image analysis system, wherein the image analysis system (404) is adapted for
- determining at least one feature by the image analysis system (404) in the at least one recorded digital image, wherein the feature correlates to a malfunction of the optical microscope system (402) during regular operation,
- producing a status signal for a state of the optical microscope system (402) by way of the image analysis system (404) based on the at least one digital image and the at least one feature contained therein, and
- determining, by using the status signal, a component group of the optical microscope system for which a maintenance procedure is necessary.

18. Computer program product for ascertaining a predictive maintenance for an optical microscope system (402) having an image sensor for recording digital images of a sample, wherein the computer program product includes a computer-readable storage medium, having program instructions which are stored thereon, wherein the program instructions are executable by one or more computers (400) or control units and cause the one or the plurality of computers (400) or control units to perform the following:
- recording (104) digital images using the image sensor during regular operation of the optical microscope system,
- transmitting (106) at least one recorded digital image as at least one input data set to an image analysis system,
- determining (108) at least one feature by the image analysis system in the at least one recorded digital image, wherein the feature correlates to a malfunction of the optical microscope system during regular operation,
- producing (110) a status signal for a state of the optical microscope system (402) by way of the image analysis system (404) based on the at least one digital image and the at least one feature contained therein, and
- determining (112), by using the status signal, a component group of the optical microscope system (402) for which a maintenance procedure is necessary.

## Revendications

1. Procédé mis en œuvre par ordinateur (100), permettant d'établir la nécessité d'une maintenance prédictive pour un système de microscope optique (402), le procédé (100) présentant les étapes consistant à
- fournir (102) un système de microscope optique (402) qui présente un capteur d'image (406) pour enregistrer des images numériques d'un échantillon,
- enregistrer (104) des images numériques au moyen du capteur d'images (406) pendant un fonctionnement normal du système de microscope optique (402),
- fournir (106) à un système d'analyse d'image (404) au moins une image numérique enregistrée sous la forme d'au moins un jeu de données d'entrée,
- déterminer (108) au moins une particularité par le système d'analyse d'image (404) sur ladite au moins une image numérique enregistrée, la particularité étant en corrélation avec un dysfonctionnement du système de microscope optique (402) en fonctionnement normal,
- générer (110) un signal d'état pour un état du système de microscope optique (402) par le système d'analyse d'image (404) sur la base de ladite au moins une image numérique et de ladite au moins une particularité comprise sur celle-ci, et
- déterminer (112), par l'exploitation du signal d'état, un groupe de composants du système de microscope optique (402), pour lequel une opération de maintenance est nécessaire.

2. Procédé (100) selon la revendication 1, dans lequel le système d'analyse d'image (404) est un système d'apprentissage ayant des propriétés de l'apprentissage machine, et dans lequel le procédé (100) présente en outre :
- l'entraînement (206) du système d'apprentissage à l'aide d'un jeu d'images numériques au moyen d'un apprentissage machine pour générer un modèle d'apprentissage permettant de reconnaître ladite au moins une particularité sur l'une des images numériques enregistrées d'échantillons en fonctionnement normal du système de microscope (402).

3. Procédé (100) selon la revendication 2, dans lequel le système d'apprentissage est un système d'apprentissage surveillé, et dans lequel les images du jeu d'images numériques pour l'apprentissage surveillé sont annotées avec des métadonnées pour la génération du modèle d'apprentissage.

4. Procédé (100) selon la revendication 3, dans lequel les métadonnées présentent au moins un élément sélectionné dans le groupe composé d'une valeur d'intervalle de temps dans lequel l'opération de maintenance est nécessaire, d'un temps de défaillance attendu d'un composant du système de microscope (402), d'une indication d'état numérique d'un composant individuel du système de microscope (402), et d'une désignation d'un composant défectueux du système de microscope (402).

5. Procédé (100) selon l'une quelconque des revendications précédentes, dans lequel la détermination du groupe de composants du système de microscope (402) présente en outre :
- la détermination d'une valeur d'intervalle de temps dans lequel l'opération de maintenance est nécessaire.

6. Procédé (100) selon l'une quelconque des revendications précédentes, dans lequel au moins une valeur de capteur détectée supplémentaire du système de microscope (402) qui sont utilisées en tant que données d'entrée supplémentaires pour le système d'apprentissage en vue de la génération du signal d'état par le système d'analyse d'image (404).

7. Procédé (100) selon l'une quelconque des revendications précédentes, dans lequel ladite au moins particularité comprise sur ladite au moins une image numérique enregistrée en fonctionnement normal est au moins l'une du groupe composé de stries, d'instabilité, d'une luminosité irrégulière, d'une résolution réduite, d'un bruit d'image excessif, d'un rapport signal/arrière-plan faible, d'une puissance laser faible, d'une sensibilité réduite et de lacunes sur l'image numérique.

8. Procédé (100) selon l'une quelconque des revendications 2 à 7, dans lequel le modèle d'apprentissage est généré pour un seul système de microscope (402) ou pour une pluralité de systèmes de microscope (402).

9. Procédé (100) selon l'une quelconque des revendications précédentes, dans lequel pendant le fonctionnement normal du système de microscope (402), au moins une valeur de paramètre de commande d'un élément de commande du système de microscope (402) est mesurée qui est exploitée en plus lors de la détermination du signal d'état.

10. Procédé (100) selon l'une quelconque des revendications 2 à 9, dans lequel le modèle d'apprentissage concerne en plus de la reconnaissance de ladite au moins une particularité au moins une catégorie qui est sélectionnée dans le groupe composé de : la classification de niveaux de service du système de microscope (402), la régression au temps de défaillance attendu du système de microscope (402), la corrélation de ladite au moins une particularité ou d'une combinaison de plusieurs particularités de l'image numérique avec la détermination d'un besoin de maintenance d'un composant ou d'un groupe de composants pouvant être associé du système de microscope (402).

11. Procédé (100) selon l'une quelconque des revendications précédentes, dans lequel la génération du signal d'état tient compte en plus d'une combinaison de signaux de commande, dans lequel respectivement l'un des signaux de commande se réfère à un élément parmi : une source d'erreur dans le système de microscope (402), un facteur de confiance du signal de la source d'erreur, un type d'une erreur, une valeur numérique d'une perte de qualité, une opération de maintenance nécessaire, un intervalle de temps pour une opération de maintenance, une indication du composant pour lequel une opération de maintenance est nécessaire, une information concernant des réglages alternatifs du système de microscope afin de compenser au moins partiellement un dysfonctionnement d'un composant, une information concernant une source d'erreur d'un positionnement ou une mauvaise préparation de l'échantillon.

12. Procédé (100) selon l'une quelconque des revendications 2 à 11, dans lequel le signal d'état est déterminé par le système d'apprentissage en plus en ce qu'une comparaison utilisant des séries chronologiques détectées en fonctionnement normal d'une combinaison de paramètres de capteur d'éléments de commande du système de microscope (402) avec des valeurs de comparaison de la combinaison de paramètres de capteur d'éléments de commande du système de microscope (402) produit un écart significatif.

13. Procédé (100) selon l'une quelconque des revendications précédentes, dans lequel la détermination d'au moins une particularité est effectuée par le système d'analyse d'image (404), par
- la détection, dans une séquence d'images enregistrées du système de microscope (402) en fonctionnement normal d'une particularité récurrente qui présente dans la séquence chronologique d'images enregistrées un gradient, des oscillations ou un comportement irrégulier ou qui survient de manière identique sur chaque image.

14. Procédé (100) selon la revendication 13, dans lequel la séquence d'images enregistrées du système de microscope (402) en fonctionnement normal est un sousensemble d'une totalité d'images enregistrées du système de microscope (402) en fonctionnement normal.

15. Procédé selon l'une quelconque des revendications 2 à 14, dans lequel le système d'apprentissage est un réseau neuronal.

16. Procédé selon l'une quelconque des revendications 13 ou 15, dans lequel le réseau neuronal est basé sur au moins l'une des technologies suivantes : Deep Autoencoder, One-Class-Classification ou Novelty Detection.

17. Système de surveillance de maintenance (400) pour la maintenance prédictive destinée à un système de microscope optique (402), le système de surveillance de maintenance (400) présentant
- un système de microscope optique (402) qui présente un capteur d'image (406) pour enregistrer des images numériques d'un échantillon, dans lequel le capteur d'image est adapté pour enregistrer des images numériques pendant un fonctionnement normal du système de microscope optique (402),
- un système d'analyse d'image (404) adapté pour recevoir au moins une image numérique enregistrée sous la forme d'au moins un jeu de données d'entrée au système d'analyse d'image, le système d'analyse d'image (404) étant adapté pour
- déterminer au moins une particularité par le système d'analyse d'image (404) sur ladite au moins une image numérique enregistrée, dans lequel la particularité est en corrélation avec un dysfonctionnement du système de microscope optique (402) en fonctionnement normal,
- générer un signal d'état pour un état du système de microscope optique (402) par le système d'analyse d'image (404) sur la base de ladite au moins une image numérique et de ladite au moins une particularité comprise sur celle-ci, et
- déterminer, par l'exploitation du signal d'état, un groupe de composants du système de microscope optique pour lequel une opération de maintenance est nécessaire.

18. Produit de programme informatique permettant d'établir une maintenance prédictive pour un système de microscope optique (402) avec un capteur d'image pour enregistrer des images numériques d'un échantillon, dans lequel le produit de programme informatique présente un support de stockage lisible par ordinateur qui présente des instructions de programme stockées sur celui-ci, dans lequel les instructions de programme peuvent être exécutées par un ou plusieurs ordinateurs (400) ou une ou plusieurs unités de commande et font que ledit un ou les plusieurs ordinateurs (400) ou ladite une ou les plusieurs unités de commande exécutent les étapes suivantes consistant à :
- enregistrer (104) des images numériques au moyen du capteur d'image pendant un fonctionnement normal su système de microscope optique,
- retransmettre (106) à un système d'analyse d'image au moins une image numérique enregistrée sous la forme d'au moins un jeu de données d'entrée,
- déterminer (108) au moins une particularité par le système d'analyse d'image sur ladite au moins une image numérique enregistrée, la particularité étant en corrélation avec un dysfonctionnement du système de microscope optique en fonctionnement normal,
- générer (110) un signal d'état pour un état du système de microscope optique (402) par le système d'analyse d'image (404) sur la base de ladite au moins une image numérique et de ladite au moins une particularité comprise sur celle-ci, et
- déterminer (112), par l'utilisation du signal d'état, un groupe de composants du système de microscope optique (402) pour qui une opération de maintenance est nécessaire.
